# EUROPÄISCHE PATENTANMELDUNG

(11) **EP 4 682 440 A1**
(43) Veröffentlichungstag der Anmeldung: **21.01.2026**
(21) Anmeldenummer: 24189415.3
(22) Anmeldetag: 18.07.2024
(51) Int. Cl.: F25B 1/10, F25B 9/00, F25B 40/02, F25B 43/02, F25B 49/02

(54) **PRÜFKAMMER UND VERFAHREN ZUR STEUERUNG**

(71) Anmelder: Weiss Technik GmbH, 35447 Reiskirchen (DE)
(72) Erfinder: Zahrt, Yannik, 35466 Rabenau (DE); Haack, Christian, 35037 Marburg (DE); Maul, Felix, 35447 Reiskirchen (DE)
(74) Vertreter: advotec.

(57) **Zusammenfassung**

Die Erfindung betrifft ein Verfahren zur Konditionierung von Luft in einem gegenüber einer Umgebung verschließbaren und temperaturgedämmten Prüfraum einer Prüfkammer sowie eine Prüfkammer, insbesondere eine Klimakammer, zur Aufnahme von Prüfgut, wobei mittels einer Kühleinrichtung (10) einer Temperiervorrichtung der Prüfkammer, mit einem Kühlkreislauf (11) mit Kohlenstoffdioxid als einem Kältemittel, einem Wärmeübertrager (12) in dem Prüfraum, einem Verdichter (13, 14) einer Ölvorrichtung (41), einem Gaskühler (15) und einem Expansionsventil (16) eine Temperatur in einem Temperaturbereich von -20 °C bis +180 °C innerhalb des Prüfraum ausgebildet wird, wobei die Temperatur in dem Prüfraum mittels einer Steuervorrichtung der Prüfkammer gesteuert und/oder geregelt wird, wobei mittels zumindest eines Ölabscheiders (42) der Ölvorrichtung Öl aus dem Kältemittel abgeschieden und mittels einer Zuführeinrichtung (43) der Ölvorrichtung zu dem Verdichter geleitet wird, wobei während eine Stillstands des Verdichters und bei einer Temperatur des Kältemittels von zumindest 20 °C ein Druck P des Kältemittels in dem Kühlkreislauf ausgebildet wird, wobei eine Teilmenge des Kohlenstoffdioxids von dem Öl absorbiert wird, wobei ein Menge an Kohlenstoffdioxid und/oder eine Menge an Öl in dem Kühlkreislauf zur Ausbildung des Drucks P unter Berücksichtigung der Absorption der Teilmenge des Kohlenstoffdioxids ausgebildet wird.

## Beschreibung

Die Erfindung betrifft eine Prüfkammer, insbesondere Klimakammer zur Konditionierung von Luft, sowie ein Verfahren zur Konditionierung von Luft in einem gegenüber einer Umgebung verschließbaren und temperaturgedämmten Prüfraum einer Prüfkammer, insbesondere Klimakammer, zur Aufnahme von Prüfgut, wobei mittels einer Kühleinrichtung einer Temperiervorrichtung der Prüfkammer, mit einem Kühlkreislauf mit Kohlenstoffdioxid als einem Kältemittel, einem Wärmeübertrager in dem Prüfraum, einem Verdichter, einer Ölvorrichtung, einem Gaskühler und einem Expansionsventil eine Temperatur in einem Temperaturbereich von -20 °C bis +180 °C innerhalb des Prüfraums ausgebildet wird, wobei die Temperatur in dem Prüfraum mittels einer Steuervorrichtung der Prüfkammer gesteuert und/oder geregelt wird, wobei mittels zumindest eines Ölabscheiders der Ölvorrichtung Öl aus dem Kältemittel abgeschieden und mittels einer Zuführeinrichtung der Ölvorrichtung zu dem Verdichter geleitet wird, wobei während eines Stillstands des Verdichters und bei einer Temperatur des Kältemittels entsprechend einer Umgebungstemperatur, insbesondere von zumindest 20 °C, ein Druck P des Kältemittels in dem Kühlkreislauf ausgebildet wird.

Derartige Prüfkammern werden regelmäßig zur Überprüfung von physikalischen und/oder chemischen Eigenschaften von Gegenständen, insbesondere Vorrichtungen eingesetzt. So sind Temperaturprüfschränke oder Klimaprüfschränke bekannt, innerhalb derer Temperaturen in einem Bereich von -70 °C bis +180 °C eingestellt werden können. Bei Klimaprüfschränken können ergänzend gewünschte Klimabedingungen eingestellt werden, denen dann die Vorrichtung bzw. das Prüfgut über einen definierten Zeitraum ausgesetzt wird. Eine Temperierung eines das zu prüfende Prüfgut aufnehmendem Prüfraums erfolgt regelmäßig in einem Umluftkanal innerhalb des Prüfraums. Der Umluftkanal bildet einen Luftbehandlungsraum im Prüfraum aus, in dem Wärmetauscher zur Erwärmung oder Kühlung der den Umluftkanal bzw. den Prüfraum durchströmenden Luft angeordnet sind. Dabei saugt ein Lüfter bzw. ein Ventilator die im Prüfraum befindliche Luft an und leitet sie im Umluftkanal zu den jeweiligen Wärmetauschern. Das Prüfgut kann so temperiert oder auch einem definierten Temperaturwechsel ausgesetzt werden. Während eines Prüfinterwalls kann dann beispielsweise eine Temperatur zwischen einem Temperaturmaximum und einem Temperaturminimum der Prüfkammer wechseln. Eine derartige Prüfkammer ist beispielweise aus der EP 0 344 397 A2 bekannt.

Das in einem Kühlkreislauf eingesetzte Kältemittel sollte ein relativ geringes CO₂-Äquivalent aufweisen, das heißt ein relatives Treibhauspotenzial oder auch Global Warming Potential (GWP) sollte möglichst gering sein, um eine indirekte Schädigung der Umwelt durch das Kältemittel bei Freisetzung zu vermeiden. Es ist daher auch bekannt Kohlenstoffdioxid (CO₂) bzw. Kohlendioxid als Reinstoffkältemittel zu verwenden. Kohlenstoffdioxid ist kostengünstig erhältlich, nicht brennbar und durch einen GWP von 1 im Wesentlichen umweltneutral. Kohlenstoffdioxid weist eine Gefriertemperatur bzw. einen Tripelpunkt von -56,6 °C auf, was eine Erzielung von niedrigeren Temperaturen mit Kohlenstoffdioxid alleine nicht ermöglicht.

Da Kohlenstoffdioxid als Kältemittel eine sehr hohe volumetrische Kälteleistung aufweist, wird selbst bei einem Einsatz von Verdichtern mit sehr wenig Hubvolumenstrom eine sehr große Kälteleistung durch den Kühlkreislauf bereitgestellt. Darüber hinaus ist ein Druckbereich von Kühlkreisläufen mit Kohlenstoffdioxid als Kältemittel bei einem transkritischen Betrieb sehr hoch (bis 120 bar), weshalb die zur Ausbildung des Kühlkreislaufs erforderlichen Komponenten vergleichsweise teuer sind.

Weiter sind Kühleinrichtungen bekannt, die als sogenannte Boosteranlage ausgeführt sind. In einem Kühlkreislauf der Kühleinrichtungen ist stets ein Hochdruckverdichter einem Niederdruckverdichter in Reihe nachgeschaltet, so dass eine stufenweise Verdichtung des Kältemittels mit dem Niederdruckverdichter und nachfolgend mit dem Hochdruckverdichter erfolgt. Aufgrund der hohen Anforderungen an eine Temperaturregelung innerhalb des Temperaturbereichs des Prüfraums kommt es während eines Betriebs der Prüfkammer regelmäßig zu Schwankungen in einer Lastanforderung. Eine von den Verdichtern und dem Expansionsventil erzeugte Kälteleistung muss daher stufenlos regelbar sein. Gleichwohl ist es wünschenswert, dass die Verdichter, wenn es sich beispielsweise um Kompressoren handelt, nicht häufig eingeschaltet und ausgeschaltet werden, um eine Lebensdauer der Verdichter zu verlängern.

Während eines Betriebs der Kühleinrichtung wird dem Kühlkreislauf von einer Ölvorrichtung Öl zugeführt. Dabei wird das Öl in ein Verdichtergehäuse des Verdichters dosiert, wodurch eine Schmierung der bewegten Bauteile des Verdichters erfolgt. Das Öl vermischt sich mit dem Kältemittel und gelangt in Strömungsrichtung des Kältemittels nachfolgend dem Verdichter zu einem Ölabscheider in dem Kühlkreislauf, über den das in dem Kältemittel befindliche Öl abgeschieden und in Art eines Kreislaufs dem Verdichter wieder zugeführt wird. Eine kontinuierliche Zuführung von Öl zu dem Verdichter muss immer dann erfolgen, wenn der Verdichter betrieben wird, um eine ausreichende Schmierung des Verdichters zu gewährleisten.

In Abhängigkeit eines Temperaturwechsels im Prüfraum treten Lastschwankungen auf, sodass der Verdichter auch außer Betrieb genommen wird. Ein Stillstand des Verdichters stellt sich immer dann ein, wenn keine Kühlung des Prüfraums erforderlich ist oder beispielsweise sehr hohe Temperaturen von bis zu +180 °C ausgebildet werden sollen. Im Kühlkreislauf kann sich dann noch vergleichsweise kaltes Kältemittel unter hohem Druck befinden, beispielsweise in einer Speichereinrichtung. So kann auch wieder eine schnelle Kühlung des Wärmeübertragers im Prüfraum ermöglicht werden, wenn dies erforderlich sein sollte. Wird der Verdichter über einen längeren Zeitraum in einen Stillstand versetzt, beispielsweise, wenn die Prüfkammer außer Betrieb genommen wird, transportiert werden soll, oder noch nicht in Betrieb genommen wurde, nimmt das Kältemittel in dem Kühlkreislauf zwangsläufig eine Umgebungstemperatur an. Je nach Umgebungstemperatur, die beispielsweise 20 °C, 35 °C oder auch bis zu 55 °C bei einem Transport betragen kann, stellt sich ein Stillstandsdruck des Kältemittels innerhalb des Kühlkreislaufs ein. Hier besteht die Gefahr, dass ein maximal zulässiger Druck des Kältemittels innerhalb des Kühlkreislaufs überschritten wird. Es ist daher bekannt Kühlkreisläufe mit einer so genannten Stillstandskühlung auszustatten um zumindest einen Teil des Kältemittels soweit abzukühlen, dass der maximal zulässige Druck nicht überschritten wird. Weiter können auch an dem Kühlkreislauf ein oder mehrere Sicherheitsventile vorgesehen sein, über die bei einer Überschreitung des maximal zulässigen Drucks Kältemittel aus dem Kühlkreislauf in eine Umgebung entweichen kann. Diese Sicherheitsventile müssen nach einem Auslösen erneuert werden. Nachteilig ist hier, dass die Stillstandskühlung während eines Transports nicht aktiv ist, ggf. mit Energie versorgt werden muss und vergleichsweise kostenaufwändig ist. Das über ein Sicherheitsventil entwichene Kältemittel muss zur Inbetriebnahme der Prüfkammer wieder in den Kühlkreislauf nachgefüllt werden, um die erforderliche Menge an Kältemittel in dem Kühlkreislauf bereitzustellen. Hierzu ist dann eine entsprechende Wartung der Prüfkammer erforderlich.

Der vorliegenden Erfindung liegt daher die Aufgabe zugrunde, ein Verfahren zur Konditionierung von Luft in einem Prüfraum einer Prüfkammer sowie eine Prüfkammer vorzuschlagen, das bzw. die einen kostengünstigen Betrieb und Transport ermöglicht.

Diese Aufgabe wird durch ein Verfahren mit den Merkmalen des Anspruchs 1 und eine Prüfkammer mit den Merkmalen des Anspruchs 18 gelöst.

Bei dem erfindungsgemäßen Verfahren zur Konditionierung von Luft in einem gegenüber einer Umgebung verschließbaren und temperaturgedämmten Prüfraum einer Prüfkammer, insbesondere Klimakammer zur Aufnahme von Prüfgut, wird mittels einer Kühleinrichtung einer Temperiervorrichtung der Prüfkammer, mit einem Kühlkreislauf mit Kohlenstoffdioxid als einem Kältemittel, einem Wärmeübertrager in dem Prüfraum, einem Verdichter, einer Ölvorrichtung, einem Gaskühler und einem Expansionsventil eine Temperatur in einem Temperaturbereich von -20 °C bis +180 °C innerhalb des Prüfraums ausgebildet, wobei die Temperatur in dem Prüfraum mittels einer Steuervorrichtung der Prüfkammer gesteuert und/oder geregelt wird, wobei mittels zumindest eines Ölabscheiders der Ölvorrichtung Öl aus dem Kältemittel abgeschieden und mittels einer Zuführeinrichtung der Ölvorrichtung zu dem Verdichter geleitet wird, wobei während eines Stillstands des Verdichters und bei einer Temperatur des Kältemittels entsprechend einer Umgebungstemperatur, insbesondere von zumindest 20 °C, ein Druck P des Kältemittels in dem Kühlkreislauf ausgebildet wird, wobei eine Teilmenge des Kohlenstoffdioxids vom dem Öl absorbiert wird, wobei eine Menge an Kohlenstoffdioxid und/oder eine Menge an Öl in dem Kühlkreislauf zur Ausbildung des Drucks P unter Berücksichtigung der Absorption der Teilmenge des Kohlenstoffdioxids ausgewählt wird.

Während des Betriebs der Prüfkammer kann es vorgesehen sein den Verdichter abzuschalten, wenn beispielsweise ausgehend von einer vergleichsweise tiefen Temperatur in dem Prüfraum von -20 °C im Rahmen eines Prüfzyklus eine Temperaturerhöhung in dem Prüfraum erfolgen soll. Regelmäßig befindet sich dabei noch verdichtetes und kaltes Kältemittel innerhalb des Kühlkreislaufs und es ist eine Druckdifferenz zwischen einer Hochdruckseite in einer Strömungsrichtung des Kältemittels ausgehend von dem Verdichter bis zu dem Expansionsventil und einer Niederdruckseite des Kühlkreislaufs in einer Strömungsrichtung des Kältemittels aus den von dem Expansionsventil bis zu dem Verdichter ausgebildet. Wird der Verdichter über einen längeren Zeitraum abgeschaltet bzw. die Prüfkammer außer Betrieb genommen, stellt sich ein Druckausgleich zwischen der Hochdruckseite und der Niederdruckseite des Kühlkreislaufs über das Expansionsventil oder einen zwischen der Hochdruckseite und der Niederdruckseite verlaufenden Bypass des Kühlkreislaufs ein. Weiter nimmt das Kältemittel eine Umgebungstemperatur an. Als Referenz einer Umgebungstemperatur kann hier eine Temperatur von 20 °C angenommen werden. Bei einem Druckausgleich zwischen der Hochdruckseite und der Niederdruckseite wird innerhalb des Kühlkreislaufs im Wesentlichen der gleiche Druck P des Kältemittels ausgebildet.

Überraschenderweise hat sich herausgestellt, dass das in dem Kühlkreislauf zusammen mit dem Kältemittel befindliche Öl ein Teil bzw. eine Teilmenge des Kältemittels bzw. des Kohlenstoffdioxids absorbieren kann. Dies bedeutet, dass Moleküle des Kohlenstoffdioxids innerhalb von Molekülen des Öls eingelagert werden. Diese Absorption erfolgt in einem verwertbaren Maße insbesondere bei höheren Temperaturen bzw. bei einer Temperatur von zumindest 20 °C oder mehr, sodass dieser Effekt zur Begrenzung eines Stillstandsdrucks des Kältemittels nutzbar gemacht werden kann. Wesentliche Größen zur Ausbildung des Drucks P sind ein Volumen des Kühlkreislaufs mit der darin befindlichen Menge an Kohlenstoffdioxid und der Menge an Öl sowie eine Temperatur dieser Stoffe.

Insbesondere eine höhere Temperatur führt zu einem Phasenwechsel des Kohlenstoffdioxids und weiter zu einer Druckerhöhung infolge von Wärmedehnung. Da eine Teilmenge des Kohlenstoffdioxids von dem Öl absorbiert wird, wird ein Volumen des Kohlenstoffdioxids vermindert, was zu einer Druckminderung führt. Erfindungsgemäß ist nun vorgesehen, die Menge bzw. eine Gesamtmenge an Kohlenstoffdioxid und/oder eine Menge bzw. eine Gesamtmenge an Öl in dem Kühlkreislauf zur Ausbildung des zu erreichenden Stillstandsdrucks bzw. Drucks P unter Berücksichtigung der Absorption der Teilmenge des Kohlenstoffdioxids in dem Öl auszuwählen. Das bedeutet, dass die Menge an Kohlenstoffdioxid und die Menge an Öl soweit aufeinander abgestimmt werden, dass bei 20 °C der Druck P des Kältemittels in dem Kühlkreislauf nicht überschritten wird. Die Abstimmung kann alternativ auch so erfolgen, dass bei 35 °C, bevorzugt bei 55 °C der Druck P des Kältemittels in dem Kühlkreislauf nicht überschritten wird. Infolgedessen müssen dann auch keine konstruktiven Maßnahmen ergriffen werden, die verhindern, dass sich ein unzulässig hoher Druck während eines Stillstands des Verdichters einstellt. Hierdurch kann ein Aufbau und damit die Herstellung der Kühleinrichtung wesentlich vereinfacht werden. Auch wird ein Transport der Prüfkammer einfacher möglich und es bedarf keiner Prüfung und Wartung vor einer Inbetriebnahme mit dem sonst erforderlichen Nachfüllen von Kältemittel in den Kühlkreislauf.

So kann die Teilmenge des Kohlenstoffdioxids während eines Stillstands des Verdichters und bei einer Temperatur des Kältemittels von zumindest 20 °C von dem Öl absorbiert werden. Die Teilmenge des Kohlenstoffdioxids kann beispielsweise je nach verwendetem Öl und Druck im Kühlkreislauf zwischen 2 % und 35 % der Gesamtmenge an Kohlenstoffdioxid betragen. Insbesondere ist es vorteilhaft, wenn ein Druck P von 20 bar bis 120 bar, bevorzugt von 40 bar bis 50 bar bei 20 °C in dem Kühlkreislauf während des Stillstands des Verdichters ausgebildet wird.

Ein Verhältnis der Menge an Kohlenstoffdioxid und der Menge an Öl im Kühlkreislauf kann unter Berücksichtigung der Absorption der Teilmenge des Kohlenstoffdioxids ausgewählt werden. Das Verhältnis bzw. ein Quotient der Menge an Kohlenstoffdioxid und der Menge an Öl kann dann für das jeweilige Volumen des Kühlkreislaufs und den Druck P bei 20 °C bestimmt werden. Die Auswahl des Verhältnisses bzw. der jeweiligen Mengen an Öl und Kohlenstoffdioxid kann auch für jede beliebige andere Temperatur des Kältemittels erfolgen. Hierbei kann dann der jeweilige Absorptionsgrad des Kohlenstoffdioxids in dem Öl berücksichtigt werden.

Die Menge an Öl in dem Kühlkreislauf kann größer ausgewählt werden als eine für den Betrieb des Verdichters erforderliche Menge an Öl. Um einen Betrieb des Verdichters mit hoher Standzeit zu gewährleisten muss die Ölvorrichtung stets eine erforderliche Menge an Öl aufweisen, die so groß ist, dass eine kontinuierliche Schmierung des im Betrieb befindlichen Verdichters gewährleistet ist. Im Regelfall ist eine Verwendung einer größeren Menge an Öl in dem Kühlkreislauf nicht sinnvoll, da dies höhere Kosten verursacht, eine Gesamtmenge an Kohlenstoffdioxid vermindert und auch eventuell einen für größere Ölvolumen geeigneten Ölabscheider erfordert. Wie sich herausgestellt hat kann die Erhöhung der Gesamtmenge an Öl in dem Kühlkreislauf jedoch dazu führen, dass eine größere Menge an Kohlenstoffdioxid von dem Öl absorbiert werden kann, was wiederum zur Erreichung des Drucks P während eines Stillstands des Verdichters vorteilhaft genutzt werden kann. So kann nun auf andere eventuell erforderliche konstruktive Maßnahmen zur Begrenzung des Drucks oder zur verstärkten Ausführung des Kühlkreislaufs verzichtet werden, was insgesamt einen kostengünstigeren Betrieb der Prüfkammer ermöglicht.

Der Druck P des Kältemittels kann in dem Kühlkreislauf kleiner als oder gleich groß wie ein für den Kühlkreislauf maximal zulässiger Druck Pmax des Kältemittels ausgebildet werden. Unter dem maximal zulässigen Druck wird ein Druck im Sinne der zum Prioritätszeitpunkt für gattungsgemäße Kühlkreiskreisläufe geltenden Richtlinien und technischen Regeln verstanden, vorzugsweise gemäß Druckgeräterichtlinie 2014/68/EU und/oder DIN EN 378. Wenn die Menge an Kohlenstoffdioxid und Öl so ausgewählt ist, dass der maximal zulässige Druck infolge der Absorption des Kohlenstoffdioxids in dem Öl nicht überschritten wird, kann auf die sonst üblichen konstruktiven Sicherheitsmaßnahmen verzichtet werden.

So kann während des Stillstands des Verdichters und bei der Temperatur des Kältemittels von zumindest 20 °C das Kältemittel weder mit einer Stillstandskühlung gekühlt noch mittels eines Sicherheitsventils aus dem Kühlkreislauf abgelassen werden. Es kann dann auf die Stillstandskühlung und/oder das Sicherheitsventil verzichtet werden. Dann kann auch nicht mehr das Problem auftreten, dass nach einem Transport der Prüfkammer eine Wartung durchgeführt werden muss, um festzustellen, ob über das Sicherheitsventil Kältemittel in eine Umgebung entwichen ist. Prinzipiell kann dennoch ein Sicherheitsventil vorhanden sein, jedoch kann dann der Druck P des Kältemittels dann so eingestellt werden, dass dieser signifikant kleiner ist als der maximal zulässige Druck Pₘₐₓ des Sicherheitsventils.

Mittels eines Sammlers der Ölvorrichtung kann Öl gespeichert werden, wobei das Öl in dem Sammler über zumindest ein Zuführventil in einer Zuführleitung der Zuführeinrichtung zu dem Verdichter geleitet werden kann. Das Zuführventil kann beispielsweise mittels der Steuervorrichtung gesteuert und/oder geregelt werden. Der Sammler kann eine Teilmenge bzw. eine überwiegende Menge des in dem Kühlkreislauf befindlichen Öls aufnehmen. Das Öl in dem Sammler kann dann dem gleichen Druck ausgesetzt sein, wie das Kältemittel in dem Kühlkreislauf. Eine Absorption des Kohlenstoffdioxids in dem in dem Sammler befindlichen Öl kann dann ohne weitere konstruktive Maßnahmen erfolgen. Der Sammler kann so beschaffen sein, dass zumindest eine Gesamtmenge des im Kühlkreislauf befindlichen Öls in dem Sammler gespeichert werden kann. Das in dem Sammler befindliche Öl kann dann einfach über das Zuführventil in die Zuführleitung abgegeben werden, wobei das Öl dann über die Zuführleitung zu dem Verdichter gelangen kann.

Das Zuführventil kann geöffnet werden, wenn der Verdichter betrieben wird, und das Zuführventil kann geschlossen werden, wenn der Verdichter angehalten wird. Während eine Stillstands des Verdichters wird dann das Öl nicht weiter zu dem Verdichter geleitet, sodass eine möglichst große Menge an Öl zur Absorption des Kohlenstoffdioxids zur Verfügung steht. In Abhängigkeit der Bauart des Verdichters kann auch die im Verdichter befindliche Menge an Öl zur Absorption des Kohlenstoffdioxids genutzt werden.

Mittels eine Dosierventils der Zuführeinrichtung kann in der Zuführleitung zu dem Verdichter Öl in den Verdichter dosiert werden. Das Dosierventil kann unmittelbar an oder benachbart dem Verdichter in der Zuführleitung verbaut sein. Das Dosierventil kann beispielsweise einen Querschnitt der Zuführleitung soweit begrenzen, dass nur die für den Verdichter erforderliche Menge an Öl zu diesem gelangt. Ein unnötig hoher Volumenstrom an Öl in der Zuführleitung und einem Leitungsabschnitt von dem Verdichter in Strömungsrichtung des Kältemittels zu dem Ölabscheider kann so begrenzt werden.

Mittels der Ölvorrichtung kann eine Teilmenge des Öls in dem Sammler mit einer steigenden Temperatur des Kältemittels erhöht und mit einer fallenden Temperatur des Kältemittels vermindert werden. Folglich kann die Teilmenge des Öls in dem Sammler so variiert werden, dass diese an einen Absorptionsgrad des Öls, der von der Temperatur des Kältemittels während eines Betriebs oder eines Stillstands des Verdichters bzw. von einer Umgebungstemperatur abhängig ist, vorteilhaft angepasst werden. Prinzipiell kann aber auch vorgesehen sein, die Gesamtmenge des Öls in dem Kühlkreislauf zur Absorption von Kohlenstoffdioxid zu nutzen. Bei einer sehr niedrigen Temperatur des Kältemittels von beispielsweise - 20 °C kann eine Absorption von Kohlenstoffdioxid in dem Öl vernachlässigt werden und ist damit zur Ausbildung eines gewünschten Drucks P kaum nutzbar. Es kann daher mehr Öl innerhalb des Kühlkreislaufs zur Schmierung des Verdichters verwendet werden. Bei einem hohen Druck in dem Kühlkreislauf kann es zu einer starken Verdünnung des Öls und damit zu einer Abnahme einer Viskosität des Öls kommen. Insofern ist es vorteilhaft, wenn bei einem Betrieb des Verdichters stets für eine ausreichende Schmierung des Verdichters gesorgt ist.

Weiter kann einer Teilmenge des Öls in dem Sammler im Verhältnis zu einer Temperatur des Kältemittels mittels der Ölvorrichtung im Wesentlichen linear angepasst werden. Diese lineare Anpassung kann über das Zuführventil erfolgen und von der Steuervorrichtung gesteuert und/oder geregelt werden. Da sich ein Absorptionsgrad von Kohlenstoffdioxid in dem Öl, in Abhängigkeit von einer Temperatur und einem Druck ebenfalls im Wesentlichen linear verhält, kann die in dem Sammler befindliche Teilmenge an Öl an dieses Verhältnis vorteilhaft angepasst werden.

Eine Füllvolumen des Sammlers kann zumindest so groß ausgebildet sein wie ein Volumen an Öl in dem Kühlkreislauf. Der Sammler kann dann das sämtliche, in dem Kühlkreislauf befindliche Öl aufnehmen. Es ist dann auch nicht erforderlich einen eventuell externen, an den Sammler gekoppelten Speicherbehälter für Öl vorzusehen. Prinzipiell ist es jedoch auch möglich, über einen derartigen Speicherbehälter ein Ölvolumen zu regeln. Das Füllvolumen des Sammlers kann so bemessen sein, dass der Sammler die Gesamtmenge an Öl bei einer Temperatur des Kältemittels von 35 °C aufnehmen kann. Bei einem Transport der Prüfkammer kann eine Umgebungstemperatur diesen Wert oder bis zu 55 °C erreichen.

Als Öl kann Polyolesteröl verwendet werden. Das Öl kann zusätzlich mit Additiven versehen sein, die einen Verschleißschutz des Verdichters verbessern können. Weiter ist Polyolesteröl mit Kohlenstoffdioxid gut mischbar, thermisch sehr stabil und hat eine sehr niedrige Verdampfungstemperatur sowie sehr gute Schmiereigenschaften.

Der Kühlkreislauf kann mit einem Niederdruckverdichter und einem in einer Strömungsrichtung des Kältemittels dem Niederdruckverdichter nachfolgenden Hochdruckverdichter ausgebildet werden. Der Ölabscheider kann dabei in der Strömungsrichtung des Kältemittels nachfolgend dem Hochdruckverdichter und vor dem Gaskühler angeordnet im Kühlkreislauf angeordnet sein. Das Kältemittel kann dann von dem Niederdruckverdichter zu dem Hochdruckverdichter strömen. Auch kann vorgesehen sein, das Kältemittels mittels einer Ventileinrichtung wahlweise dem Niederdruckverdichter und nachfolgend dem Hochdruckverdichter oder alleine dem Hochdruckverdichter zuzuführen. Je nach Lastanforderung kann dann der Niederdruckverdichter zusammen mit dem Hochdruckverdichter oder alleine nur der Hochdruckverdichter betrieben werden. Im laufenden Betrieb der Prüfkammer kann der Niederdruckverdichter daher zeitweise abgeschaltet werden wodurch ein Großteil der für den Betrieb der Verdichter sonst erforderlichen Energie eingespart werden kann. Durch die Reihenschaltung von Niederdruckverdichter und Hochdruckverdichter kann eine stufenweise Verdichtung des Kältemittels erfolgen.

Vorteilhaft kann reines Kohlenstoffdioxid als das Kältemittel verwendet werden. Reines Kohlenstoffdioxid weist einen GWP von 1 auf, ist nicht brennbar, ungefährlich und kostengünstig erhältlich. Darüber hinaus ist Kohlenstoffdioxid ein Reinstoff bzw. azeotrop, was die vorteilhafte Durchführung des Verfahrens und dessen Varianten überhaupt erst ermöglicht.

Der Kühlkreislauf kann in einem thermodynamisch transkritischen oder in einem unterkritischen Zustand betrieben werden. Je nach Kühllastanforderung innerhalb des Prüfraums kann der Betriebszustand mittels der Steuervorrichtung entsprechend verändert werden. Bei dem unterkritischen Betrieb des Kühlkreislaufs erfolgt eine Verflüssigung des Kältemittels im Gaskühler unterhalb des kritischen Punktes des Kältemittels sowie eine Entspannung am Expansionsventil und eine Umwandlung in die gasförmige Phase oder Nassdampf. Zumindest im unterkritischen Betriebszustand kann der Verdichter, und wenn vorhanden der Hochdruckverdichter und der Niederdruckverdichter, betrieben werden. Der unterkritische Betriebszustand des Kühlkreislaufs entspricht einem Teillastbetrieb. Beim transkritischen Betriebszustand zirkuliert das Kältemittel im Kühlkreislauf im Wesentlichen im gasförmigen Zustand, das heißt eine Temperaturdifferenz ist soweit vermindert, dass das Kältemittel nicht im Gaskühler verflüssigt wird. Auch wird im transkritischen Betriebszustand ein Druck oberhalb des kritischen Punktes des Kältemittels am Gaskühler erreicht. Wenn beispielsweise eine hohe Kühllastanforderung vorliegt, bzw. eine Abkühlung ausgehend von + 180 °C auf -20 °C erforderlich ist, kann der Kühlkreislauf transkritisch betrieben werden. Für den Fall, dass eine geringe Kühllastanforderung innerhalb des Prüfraums vorliegt, beispielsweise wenn eine Temperatur konstant gehalten werden soll, oder niedrige Umgebungstemperaturen vorliegen, kann der Kühlkreislauf unterkritisch betrieben werden. Dadurch kann insbesondere bei geringen Kühllastanforderungen eine Effizienzsteigerung im Gegensatz zu ausschließlich transkritischen Betriebszuständen erzielt werden.

Mittels der Temperiervorrichtung kann eine Temperatur in einem Temperaturbereich von -40 °C bis +180 °C, bevorzugt von -55 °C bis +180 °C innerhalb des Prüfraums ausgebildet werden.

Die erfindungsgemäße Prüfkammer, insbesondere Klimakammer, zur Konditionierung von Luft, umfasst einen gegenüber einer Umgebung verschließbaren und temperaturgedämmten Prüfraum zur Aufnahme von Prüfgut, und eine Temperiervorrichtung zur Temperierung des Prüfraums, wobei mittels der Temperiervorrichtung eine Temperatur in einem Temperaturbereich von -20 °C bis +180 °C innerhalb des Prüfraums ausbildbar ist, wobei die Temperiervorrichtung eine Kühleinrichtung mit einem Kühlkreislauf mit Kohlenstoffdioxid als einem Kältemittel, einem Wärmeübertrage in dem Prüfraum, einem Verdichter, einer Ölvorrichtung, einem Gaskühler und einem Expansionsventil aufweist, wobei die Prüfkammer eine Steuervorrichtung zur Steuerung und/oder Regelung der Temperatur in dem Prüfraum aufweist, wobei mittels zumindest eines Ölabscheiders der Ölvorrichtung Öl aus dem Kältemittel abscheidbar und mittels einer Zuführeinrichtung der Ölvorrichtung zu dem Verdichter leitbar ist, wobei während eines Stillstands des Verdichters und bei einer Temperatur des Kältemittels entsprechend einer Umgebungstemperatur, insbesondere von zumindest 20 °C, ein Druck P des Kältemittels in dem Kühlkreislauf ausbildbar ist, wobei eine Teilmenge des Kohlenstoffdioxids von dem Öl absorbierbar ist, wobei ein Menge an Kohlenstoffdioxid und/oder eine Menge an Öl in dem Kühlkreislauf zur Ausbildung des Drucks P unter Berücksichtigung der Absorption der Teilmenge des Kohlenstoffdioxids ausgewählt ist. Zu den Vorteilen der erfindungsgemäßen Prüfkammer wird auf die Vorteilsbeschreibung des erfindungsgemäßen Verfahrens verwiesen.

Die Ölvorrichtung kann einen Sammler zum Speichern von Öl aufweisen, wobei der Sammler getrennt von oder integral mit dem Ölabscheider ausgebildet sein kann. Bei einer getrennten Ausbildung von Sammler und Ölabscheider kann der Sammler über eine Leitung, in der das Öl von dem Ölabscheider zu dem Sammler geleitet wird, verbunden sein. Bei einer integralen Ausbildung von Sammler und Ölabscheider ist der Sammler unmittelbar an dem Ölabscheider ausgebildet, beispielsweise innerhalb eines gemeinsamen Gehäuses.

Die Temperiervorrichtung kann eine Heizeinrichtung mit einer Heizung und einem Heiz-Wärmeübertrager in dem Prüfraum aufweisen. Die Heizeinrichtung kann beispielsweise eine elektrische Widerstandsheizung sein, die den Heiz-Wärmeübertrager beheizt, derart, dass über den Heiz-Wärmeübertrager eine Temperaturerhöhung im Prüfraum ermöglicht wird. Wenn der Wärmeübertrager und der Heiz-Wärmeübertrager mittels der Steuervorrichtung zur Kühlung oder Erwärmung der im Prüfraum umgewälzten Luft gezielt gesteuert bzw. geregelt werden können, kann mittels der Temperiervorrichtung dann innerhalb des Prüfraums eine Temperatur in dem vorstehend angegebenen Temperaturbereich ausgebildet werden.

Weitere Ausführungsformen einer Prüfkammer ergeben sich aus den Merkmalsbeschreibungen der auf den Verfahrensanspruch 1 rückbezogenen Unteransprüche.

Nachfolgend wird eine bevorzugte Ausführungsform der Erfindung unter Bezugnahme auf die beigefügte Zeichnung näher erläutert.

Es zeigen:
- **Fig.** 1: Eine Ausführungsform einer Kühleinrichtung;
- Fig. 2: ein Diagramm zur Einlagerung von Kohlenstoffdioxid in einem Kältemittelöl.

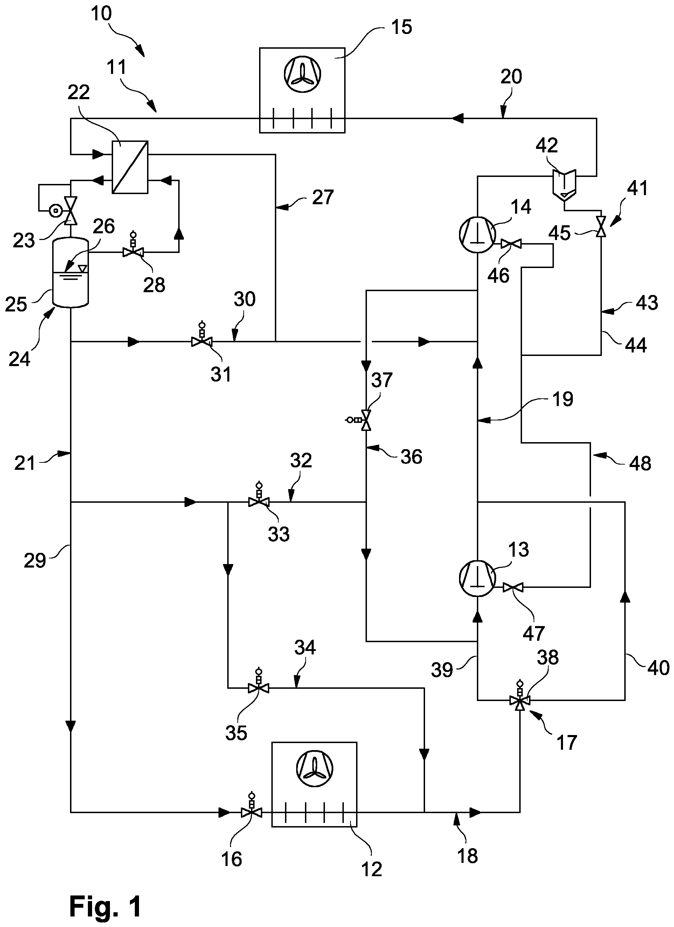

Die **Fig. 1** zeigt eine mögliche Ausführungsform einer Kühleinrichtung 10 einer hier nicht dargestellten Prüfkammer. Die Kühleinrichtung 10 umfasst einen Kühlkreislauf 11 mit Kohlenstoffdioxid (CO₂) als einem Kältemittel, einen Wärmeübertrager 12, einen Niederdruckverdichter 13, einen Hochdruckverdichter 14, einen Gaskühler 15, ein Expansionsventil 16 und eine Ventileinrichtung 17. Der Gaskühler 15 ist hier in Art eines Wärmeübertragers ausgebildet und über ein Wärmeträgermedium, wie beispielsweise Luft oder Wasser, gekühlt. Der Wärmeübertrager 12 ist in einem hier nicht dargestellten Luftbehandlungskanal der Prüfkammer angeordnet, derart, dass ein hier nicht dargestellter Lüfter die Luft im Prüfraum an dem Wärmeübertrager 12 umwälzen kann. Weiter weist der Kühlkreislauf 11 eine Niederdruckseite 18, eine Zwischendruckseite 19, eine Hochdruckseite 20 und eine Mitteldruckseite 21 auf. In der Niederdruckseite 18 ist ein Druck des Kältemittels vergleichsweise niedriger als in der Zwischendruckseite 19. In der Zwischendruckseite 19 ist ein Druck des Kältemittels vergleichsweise niedriger als in der Mitteldruckseite 21 und in der Mitteldruckseite 21 ist ein Druck des Kältemittels vergleichsweise niedriger als in der Hochdruckseite 20.

Der Kühlkreislauf 11 weist weiterhin in einer Strömungsrichtung des Kältemittels nachfolgend dem Gaskühler 15 einen internen Wärmeübertrager 22 und ein Hochdruckventil 23 auf, über das gasförmiges Kältemittel in eine Speichereinrichtung 24 entspannt bzw. dosiert wird. Die Speichereinrichtung 24 ist als ein Druckbehälter 25 ausgebildet, in dem sich eine Phasengrenze 26 zwischen dem flüssigen und dem gasförmigen Kältemittel ausbildet. An der Speichereinrichtung 24 ist ein Flashgas-Bypass 27 mit einem Flashgas-Ventil 28 des Kühlkreislaufs 11 so angeschlossen, dass aus der Speichereinrichtung 24 gasförmiges Kältemittel entnommen und auf die Zwischendruckseite 19 in Strömungsrichtung des Kältemittels nachfolgend dem Niederdruckverdichter 13 und vor dem Hochdruckverdichter 14 geleitet werden kann. Weiter ist an der Speichereinrichtung 24 ein Leitungsabschnitt 29 so angeschlossen, dass aus der Speichereinrichtung 24 flüssiges Kältemittel entnommen und zu dem Expansionsventil 16 geleitet werden kann.

Mit dem internen Wärmeübertrager 22 kann von dem Gaskühler 15 zu dem Hochdruckventil 23 strömendes Kältemittel unterkühlt werden, wobei das über das Flashgas-Ventil 28 in die Zwischendruckseite 19 vor dem Hochdruckverdichter 14 strömendes Kältemittel in dem internen Wärmeübertrager 22 überhitzt werden kann. Hierdurch kann sichergestellt werden, dass sich vor dem Hochdruckverdichter 14 gasförmiges Kältemittel befindet, sodass der Hochdruckverdichter 14 nur dieses ansaugen kann.

Darüber hinaus umfasst der Kühlkreislauf 11 einen Zwischendruckbypass 30 mit einem Zwischendruckventil 31, wobei der Zwischendruckbypass 30 in einer Strömungsrichtung nachfolgend der Speichereinrichtung 24 an den Leitungsabschnitt 29 sowie nachfolgend dem Niederdruckverdichter 13 und vor dem Hochdruckverdichter 14 an den Kühlkreislauf 11 bzw. die Zwischendruckseite 19 angeschlossen ist. Mittels des Zwischendruckventils 31 kann flüssiges Kältemittel aus der Speichereinrichtung 24 in die Zwischendruckseite 19 dosiert werden, beispielsweise wenn eine Temperatur des Kältemittels vor dem Hochdruckverdichter 14 abgesenkt werden soll. Weiter umfasst der Kühlkreislauf 11 einen Niederdruckbypass 32 mit einem Niederdruckventil 33, wobei der Niederdruckbypass 32 in einer Strömungsrichtung nachfolgend der Speichereinrichtung 24 am Leitungsabschnitt 29 sowie nachfolgend der Ventileinrichtung 17 an der Niederdruckseite 18 unmittelbar vor dem Niederdruckverdichter 13 angeschlossen ist. Mittels des Niederdruckventils 33 kann flüssiges Kältemittel aus der Speichereinrichtung 24 in die Niederdruckseite 18 vor den Niederdruckverdichter 13 dosiert werden, beispielsweise, wenn von dem Niederdruckverdichter 13 angesaugtes Kältemittel gekühlt werden soll.

Der Kühlkreislauf 11 weist einen weiteren Bypass 34 mit einem weiteren Ventil 35 auf. Der weitere Bypass 34 ist nachfolgend der Speichereinrichtung 24 an den Leitungsabschnitt 29 nachfolgend dem Wärmeübertrager 12 und in Strömungsrichtung vor der Ventileinrichtung 17 an der Niederdruckseite 18 des Kühlkreislaufs 11 angeschlossen. Mittels des weiteren Ventils 35 kann flüssiges Kältemittel aus der Speichereinrichtung 24 in die Niederdruckseite 18 in Strömungsrichtung vor die Ventileinrichtung 17 dosiert werden. Hierdurch ist es möglich die Ventileinrichtung 17 wenn nötig zu kühlen und einen ausreichenden Massenstrom für den Niederdruckverdichter 13 oder den Hochdruckverdichter 14 zur Verfügung zu stellen.

Der Kühlkreislauf 11 weist weiter einen Regelbypass 36 mit einem Regelventil 37 auf. Der Regelbypass 36 ist in Strömungsrichtung nach dem Niederdruckverdichter 13 und vor dem Hochdruckverdichter 14 an die Zwischendruckseite 19 sowie vor dem Niederdruckverdichter 13 und nach der Ventileinrichtung 17 an die Niederdruckseite 18 des Kühlkreislaufs 11 angeschlossen. Über das Regelventil 37 kann Kältemittel von der Zwischendruckseite 19 in die Niederdruckseite 18 dosiert werden. Hierdurch wird es möglich eine Sauggastemperatur bzw. einen Sauggasdruck des Kältemittels auf der Niederdruckseite 18 vor dem Niederdruckverdichter 13 zu regeln und bei Bedarf eine Druckdifferenz zwischen der Zwischendruckseite 19 und der Niederdruckseite 18 des Kühlkreislaufs 11 auszugleichen.

Die Ventileinrichtung 17 ist durch ein 3-Wege-Ventil 38 ausgebildet. Je nach Temperaturanforderung einer nicht dargestellten Steuervorrichtung der Prüfkammer wird das 3-Wege-Ventil 38 so von der Steuervorrichtung betätigt, dass das aus dem Wärmeübertrager 12 strömende Kältemittel über eine unmittelbar an dem 3-Wege-Ventil 38 angeschlossene Niederdruckleitung 39 unmittelbar zu dem Niederdruckverdichter 13 geleitet wird. Diese Kältemittel wird von dem Niederdruckverdichter 13 verdichtet und gelangt danach weiter zu dem Hochdruckverdichter 14 zur weiteren Verdichtung. Die Steuervorrichtung kann das 3-Wege-Ventil 38 auch so betätigen, dass das Kältemittel über einen Verdichterbypass 40, welcher unmittelbar an dem 3-Wege-Ventil 38 angeschlossen ist, unter Umgehung des Niederdruckverdichter 13 zu dem Hochdruckverdichter 14 gelangt. Der Verdichterbypass 40 ist in Strömungsrichtung nachfolgend dem Niederdruckverdichter 13 und vor dem Hochdruckverdichter 14 an die Zwischendruckseite 19 angeschlossen. Je nach Temperaturanforderung ist es so möglich den Niederdruckverdichter 13 zusammen mit dem Hochdruckverdichter 14 oder nur alleine den Hochdruckverdichter 14 zu betreiben. Dadurch, dass dann der Niederdruckverdichter 13 abgeschaltet ist, kann eine wesentliche Energieeinsparung erzielt werden. Der Hochdruckverdichter 14 wird insbesondere dann alleine betrieben, wenn beispielsweise eine Temperatur von -20 °C im Prüfraum ausgebildet werden soll. Der Niederdruckverdichter 13 und der Hochdruckverdichter 14 werden dann zusammen betrieben, wenn beispielsweise eine Temperatur von -50 °C in dem Prüfraum ausgebildet werden soll.

Der Wärmeübertrager 12 ist bevorzugt mit alleine einem hier nicht dargestellten Übertragerkörper ausgebildet, wobei alleine eine Leitung des Kühlkreislaufs 11 durch den Übertragerkörper verläuft. Eine Fläche des Übertragerkörpers ist so vollständig mit dem Kühlkreislauf 11 nutzbar, weshalb eine Temperaturdifferenz zwischen einer Atmosphäre des Prüfraums und des Wärmeübertragers 12, wenn eine Temperaturänderung in den Prüfraum ausgebildet werden soll, vergleichsweise niedrig sein kann. Weiter ist im Prüfraum eine hier nicht dargestellte Heizeinrichtung mit einer Heizung und einem Heiz-Wärmeübertrager vorgesehen.

Weiter weist Kühleinrichtung 10 eine Ölvorrichtung 41 auf. Die Ölvorrichtung 41 umfasst einen Ölabscheider 42 und eine Zuführeinrichtung 43. Die Zuführeinrichtung 43 ist durch eine Zuführleitung 44 mit einem Zuführventil 45 sowie Dosierventilen 46, 47 ausgebildet. Darüber hinaus umfasst der Ölabscheider 42 einen Sammler, der hier mit dem schematisch dargestellten Ölabscheider 42 integral ausgebildet und nicht näher gezeigt ist. Das im Kühlkreislauf 11 befindliche Öl dient zur Schmierung des Niederdruckverdichters 13 und des Hochdruckverdichters 14 während eines Betriebs. Der Ölabscheider 42 ist in Strömungsrichtung des Kältemittels nachfolgend dem Hochdruckverdichter 14 im Kühlkreislauf 11 vor dem Gaskühler 15 angeordnet und scheidet Öl aus dem durch den Ölabscheider 42 strömenden Kältemittel bzw. Kohlenstoffdioxid ab. Das im Sammler befindliche Öl wird über das Zuführventil 45 in die Zuführleitung 44 und von dieser zu dem Niederdruckverdichter 13 und dem Hochdruckverdichter 14 geleitet. In der Zuführleitung 44 unmittelbar vor dem Niederdruckverdichter 13 bzw. dem Hochdruckverdichter 14 ist das Dosierventil 46 bzw. 47 angeordnet, über das das Öl in der gewünschten Menge in die jeweiligen Verdichter 13 bzw. 14 zu deren Schmierung eingeleitet wird. Hierbei gelangt das Öl wieder in den Kühlkreislauf 11 zu dem Ölabscheider 42. Das Öl zirkuliert somit innerhalb eines Kreislaufs 48 der Ölvorrichtung 41.

Werden die Verdichter 13 bz14 angeschaltet, stellt sich während eines längeren Stillstands der Verdichter 13 bzw. 14 eine Temperatur des Kältemittels nahe einer Umgebungstemperatur von beispielsweise 20 °C ein. Weiter wird ein Druckausgleich innerhalb des Kühlkreislaufs 11 über beispielsweise den weiteren Bypass 34 und den Regelbypass 36 geschaffen, sodass ein verhältnismäßig gleichmäßiger Druck P des Kältemittels in dem Kühlkreislauf 11 vorherrscht. Dabei wird eine Teilmenge des Kohlenstoffdioxids von dem Öl, insbesondere dem im Ölabscheider 42 bzw. dem Sammler befindlichen Öl, absorbiert, wobei eine Menge an Kohlenstoffdioxid bzw. dessen Volumen in dem Kühlkreislauf 11 durch die Absorption soweit vermindert wird, dass der Druck P kleiner oder gleichgroß wie ein für den Kühlkreislauf 11 maximal zulässiger Druck Pₘₐₓ ist. Es ist daher nicht notwendig an dem Kühlkreislauf 11 eine Stillstandskühlung oder auch ein Sicherheitsventil zur Begrenzung des Drucks auf den maximal zulässigen Druck Pₘₐₓ vorzusehen

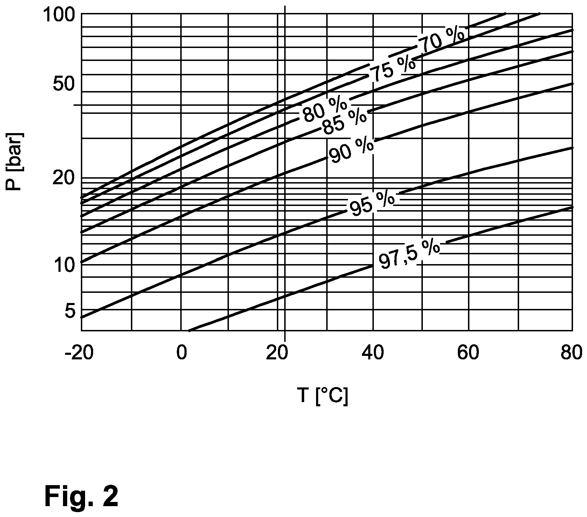

Aus dem Diagramm in Fig. 2, welches ein Verhältnis von Druck P in bar und Temperatur T in °C des Kältemittels in dem Kühlkreislauf 11 zeigt, ist ersichtlich, dass ein prozentueller Gewichtsanteil des Kohlenstoffdioxids von der Gesamtmenge des im Kühlkreislauf 11 befindlichen Kohlenstoffdioxids vom dem Öl absorbiert wird. Dies ist hier durch ein Kennlinienfeld mit Parametern in Gewichtsprozent dargestellt. Weist beispielsweise der Kühlkreislauf 11 ein Volumen von ca. 70 Liter Kohlenstoffdioxid und 7 Liter Öl auf, ergibt sich eine Masse für das Kohlenstoffdioxid von 9,7 kg. Ein prozentualer Gewichtsanteil des in dem Öl absorbierten Kohlenstoffdioxids beträgt bei beispielsweise einer Temperatur von 21,8 °C und einem Druck von beispielsweise 43 bar 28 Gewichtsprozent bzw. Masseprozent. Das Öl absorbiert dann eine Masse des Kohlenstoffdioxids von 1,9 kg. Somit verbleiben im Kühlkreislauf 7,8 kg Kohlenstoffdioxid. Ein Druck unter Vernachlässigung der Absorption des Kohlenstoffdioxids in dem Öl würde hingegeben ca. 40 bar betragen.

### Bezugszeichenliste

- 10: Kühleinrichtung
- 11: Kühlkreislauf
- 12: Wärmeübertrager
- 13: Niederdruckverdichter
- 14: Hochdruckverdichter
- 15: Gaskühler
- 16: Expansionsventil
- 17: Ventileinrichtung
- 18: Niederdruckseite
- 19: Zwischendruckseite
- 20: Hochdruckseite
- 21: Mitteldruckseite
- 22: interner Wärmeübertrager
- 23: Hochdruckventil
- 24: Speichereinrichtung
- 25: Druckbehälter
- 26: Phasengrenze
- 27: Flashgas-Bypass
- 28: Flashgas-Ventil
- 29: Leitungsabschnitt
- 30: Zwischendruckbypass
- 31: Zwischendruckventil
- 32: Niederdruckbypass
- 33: Niederdruckventil
- 34: weiterer Bypass
- 35: weiteres Ventil
- 36: Regelbypass
- 37: Regelventil
- 38: 3-Wege-Ventil
- 39: Niederdruckleitung
- 40: Verdichterbypass
- 41: Ölvorrichtung
- 42: Ölabscheider
- 43: Zuführeinrichtung
- 44: Zuführleitung
- 45: Zuführventil
- 46: Dosierventil
- 47: Dosierventil
- 48: Kreislauf

## Patentansprüche

**1.** Verfahren zur Konditionierung von Luft in einem gegenüber einer Umgebung verschließbaren und temperaturgedämmter Prüfraum einer Prüfkammer, insbesondere Klimakammer, zur Aufnahme von Prüfgut, wobei mittels einer Kühleinrichtung (10) einer Temperiervorrichtung der Prüfkammer, mit einem Kühlkreislauf (11) mit Kohlenstoffdioxid (CO₂) als einem Kältemittel, einem Wärmeübertrager (12) in dem Prüfraum, einem Verdichter (13, 14), einer Ölvorrichtung (41), einem Gaskühler (15) und einem Expansionsventil (16) eine Temperatur in einem Temperaturbereich von -20 °C bis +180 °C innerhalb des Prüfraums ausgebildet wird, wobei die Temperatur in dem Prüfraum mittels einer Steuervorrichtung der Prüfkammer gesteuert und/oder geregelt wird, wobei mittels zumindest eines Ölabscheiders (42) der Ölvorrichtung Öl aus dem Kältemittel abgeschieden und mittels einer Zuführeinrichtung (43) der Ölvorrichtung zu dem Verdichter geleitet wird, wobei während eines Stillstands des Verdichters und bei einer Temperatur des Kältemittels entsprechend einer Umgebungstemperatur, insbesondere von zumindest 20 °C, ein Druck P des Kältemittels in dem Kühlkreislauf ausgebildet wird,
**dadurch gekennzeichnet,**
**dass** eine Teilmenge des Kohlenstoffdioxids von dem Öl absorbiert wird, wobei eine Menge an Kohlenstoffdioxid und/oder eine Menge an Öl in dem Kühlkreislauf (11) zur Ausbildung des Drucks P unter Berücksichtigung der Absorption der Teilmenge des Kohlenstoffdioxids ausgewählt wird.

**2.** Verfahren nach Anspruch 1,
**dadurch gekennzeichnet,**
**dass** die Teilmenge des Kohlenstoffdioxids während eines Stillstands des Verdichters (13, 14) und bei einer Temperatur des Kältemittels von zumindest 20 °C von dem Öl absorbiert wird.

**3.** Verfahren nach Anspruch 1 oder 2,
**dadurch gekennzeichnet,**
**dass** ein Verhältnis der Menge an Kohlenstoffdioxid und der Menge an Öl in dem Kühlkreislauf (11) unter Berücksichtigung der Absorption der Teilmenge des Kohlenstoffdioxids ausgewählt wird.

**4.** Verfahren nach einem der vorangehenden Ansprüche,
**dadurch gekennzeichnet,**
**dass** die Menge an Öl in dem Kühlkreislauf (11) größer ausgewählt wird als eine für den Betrieb des Verdichters (13, 14) erforderliche Menge an Öl.

**5.** Verfahren nach einem der vorangehenden Ansprüche,
**dadurch gekennzeichnet,**
**dass** der Druck P des Kältemittels in dem Kühlkreislauf (11) kleiner als oder gleich groß wie ein für den Kühlkreislauf maximal zulässiger Druck Pₘₐₓ des Kältemittels ausgebildet wird.

**6.** Verfahren nach einem der vorangehenden Ansprüche,
**dadurch gekennzeichnet,**
**dass** während des Stillstands des Verdichters (13, 14) und bei der Temperatur des Kältemittels von zumindest 20 °C das Kältemittel weder mit einer Stillstandskühlung gekühlt noch mittels eines Sicherheitsventils aus dem Kühlkreislauf (11) abgelassen wird.

**7.** Verfahren nach einem der vorangehenden Ansprüche,
**dadurch gekennzeichnet,**
**dass** mittels eines Sammlers der Ölvorrichtung (41) Öl gespeichert wird, wobei das Öl in dem Sammler über zumindest ein Zuführventil (45) in einer Zuführleitung (44) der Zuführeinrichtung (43) zu dem Verdichter (13, 14) geleitet wird.

**8.** Verfahren nach Anspruch 7,
**dadurch gekennzeichnet,**
**dass** das Zuführventil (45) geöffnet wird, wenn der Verdichter (13, 14) betrieben wird, und das Zuführventil geschlossen wird, wenn der Verdichter angehalten wird.

**9.** Verfahren nach Anspruch 7oder 8,
**dadurch gekennzeichnet,**
**dass** mittels eines Dosierventils (46, 47) der Zuführeinrichtung (43) in der Zuführleitung (44) zu dem Verdichter (13, 14) Öl in den Verdichter dosiert wird.

**10.** Verfahren nach einem der Ansprüche 7 bis 9,
**dadurch gekennzeichnet,**
**dass** mittels der Ölvorrichtung (41) eine Teilmenge des Öls in dem Sammler mit einer steigenden Temperatur des Kältemittels erhöht und mit einer fallenden Temperatur des Kältemittels vermindert wird.

**11.** Verfahren nach einem der Ansprüche 7 bis 10,
**dadurch gekennzeichnet,**
**dass** eine Teilmenge des Öls in dem Sammler im Verhältnis zu einer Temperatur des Kältemittels mittels der Ölvorrichtung (41) im Wesentlichen linear angepasst wird.

**12.** Verfahren nach einem der Ansprüche 7 bis 11,
**dadurch gekennzeichnet,**
**dass** ein Füllvolumen des Sammlers zumindest so groß ausgebildet wird wie ein Volumen an Öl in dem Kühlkreislauf (11).

**13.** Verfahren nach einem der vorangehenden Ansprüche,
**dadurch gekennzeichnet,**
**dass** als Öl Polyolesteröl verwendet wird.

**14.** Verfahren nach einem der vorangehenden Ansprüche,
**dadurch gekennzeichnet,**
**dass** der Kühlkreislauf (11) mit einem Niederdruckverdichter (13) und einem in einer Strömungsrichtung des Kältemittels dem Niederdruckverdichter nachfolgenden Hochdruckverdichter (14) ausgebildet wird.

**15.** Verfahren nach einem der vorangehenden Ansprüche,
**dadurch gekennzeichnet,**
**dass** reines Kohlenstoffdioxid (CO₂) als das Kältemittel verwendet wird.

**16.** Verfahren nach einem der vorangehenden Ansprüche,
**dadurch gekennzeichnet,**
**dass** der Kühlkreislauf (11) in einem thermodynamisch transkritischen oder in einem unterkritischen Zustand betrieben wird.

**17.** Verfahren nach einem der vorangehenden Ansprüche,
**dadurch gekennzeichnet,**
**dass** mittels der Temperiervorrichtung eine Temperatur in einem Temperaturbereich von -40 °C bis +180 °C, bevorzugt von -55 °C bis + 180 °C, innerhalb des Prüfraums ausgebildet wird.

**18.** Prüfkammer, insbesondere Klimakammer, zur Konditionierung von Luft, umfassend einen gegenüber einer Umgebung verschließbaren und temperaturgedämmten Prüfraum zur Aufnahme von Prüfgut, und eine Temperiervorrichtung zur Temperierung des Prüfraums, wobei mittels der Temperiervorrichtung eine Temperatur in einem Temperaturbereich von -20 °C bis +180 °C innerhalb des Prüfraums ausbildbar ist, wobei die Temperiervorrichtung eine Kühleinrichtung (10) mit einem Kühlkreislauf (11) mit Kohlenstoffdioxid als einem Kältemittel, einem Wärmeübertrager (12) in dem Prüfraum, einem Verdichter (13, 14), einer Ölvorrichtung (41), einem Gaskühler (15) und einem Expansionsventil (16) aufweist, wobei die Prüfkammer eine Steuervorrichtung zur Steuerung und/oder Regelung der Temperatur in dem Prüfraum aufweist, wobei mittels zumindest eines Ölabscheiders (42) der Ölvorrichtung Öl aus dem Kältemittel abscheidbar und mittels einer Zuführeinrichtung (43) der Ölvorrichtung zu dem Verdichter leitbar ist, wobei während eines Stillstands des Verdichters und bei einer Temperatur des Kältemittels entsprechend einer Umgebungstemperatur, insbesondere von zumindest 20 °C, ein Druck P des Kältemittels in dem Kühlkreislauf ausbildbar ist,
**dadurch gekennzeichnet,**
**dass** eine Teilmenge des Kohlenstoffdioxids von dem Öl absorbierbar ist, wobei eine Menge an Kohlenstoffdioxid und/oder eine Menge an Öl in dem Kühlkreislauf zur Ausbildung des Drucks P unter Berücksichtigung der Absorption der Teilmenge des Kohlenstoffdioxids ausgewählt ist.

**19.** Prüfkammer nach Anspruch 18,
**dadurch gekennzeichnet,**
**dass** die Ölvorrichtung (41) einen Sammler zum Speichern von Öl aufweist, wobei der Sammler getrennt von oder integral mit dem Ölabscheider (42) ausgebildet ist.

**20.** Prüfkammer nach einem der Ansprüche 18 oder 19,
**dadurch gekennzeichnet,**
**dass** die Temperiervorrichtung eine Heizeinrichtung mit einer Heizung und einen Heiz-Wärmeübertrager in dem Prüfraum aufweist.
